# EUROPÄISCHE PATENTSCHRIFT

(11) **EP 1 516 711 B1**
(45) Veröffentlichungstag und Bekanntmachung des Hinweises auf die Patenterteilung: **26.10.2016**
(21) Anmeldenummer: 04021182.3
(22) Anmeldetag: 07.09.2004
(51) Int. Cl.: B29C 33/60

(54) **Trennmittel, Kunststoffformteile und Verfahren zu ihrer Herstellung**
Releasing agent, plastic moulded part and process for its manufacture
Agent de démoulage, objet en plastique moulé et procédé pour le fabriquer

(30) Priorität: 18.09.2003 DE 10343099
(43) Veröffentlichungstag der Anmeldung: 23.03.2005
(73) Patentinhaber: Covestro Deutschland AG, 51373 Leverkusen (DE)
(72) Erfinder: Haas, Peter Dr., 42781 Haan (DE); Schneider, Michael Dr., 51519 Odenthal (DE)
(74) Vertreter: Levpat

(56) Entgegenhaltungen:
- EP-A- 0 218 175
- WO-A-03/045656
- DE-A1- 3 904 810

## Beschreibung

Die vorliegende Erfindung betrifft Trennmittel und schadstoffarme Kunststoffformteile und ein Verfahren zu ihrer Herstellung unter Einsatz bestimmter Zusatzmittel, die die Konzentration unerwünschter, potentiell gesundheitsschädlicher Substanzen in der Randzone und an der Oberfläche des Formteils verringern, ohne die übrigen mechanischen Eigenschaften negativ zu beeinflussen.

Hochmolekulare synthetische Stoffe (Polymerisate) wie beispielsweise Kunststoffe, Kunstharze, Fasern und Elastomere spielen in der Technik eine außerordentlich wichtige Rolle. Die Verarbeitung von Kunststoffen geschieht beispielsweise durch Kalt- oder Warmverformung, insbesondere durch Walzen, Spritzen oder Pressen. Beim "Warmpressverfahren" gibt man das Material als Tablette oder Granulat in die Presse und erhitzt; das plastisch gewordene Material füllt alle Hohlräume der Pressform genau aus und behält nach dem Abkühlen seine Form bei. Folien werden z.B. durch Verarbeiten von Lösungen gegossen. Die Herstellung von Kunststoffformteilen kann außer durch Verarbeitung von fertigen Polymerisaten in Form von Granulat o.ä. auch durch Umsetzung von Reaktionsmischungen erfolgen. Beispielsweise wird der größte Teil der Polyurethane, insbesondere der Polyurethanschaumstoffe, nach dem Einstufen- oder one-shot-Verfahren hergestellt, bei dem die eingesetzten Rohstoffkomponenten nach einer vorgegebenen Rezeptur genau dosiert und vermischt werden und das entstandene reaktionsfähige Gemisch dann aus der Mischkammer in Formgebungsvorrichtungen eingetragen wird. Ein anderes Verfahren ist das Zweistufen-Verfahren oder Prepolymer-Verfahren, welches z.B. für die Herstellung von Elastomeren von Bedeutung ist.

Während der Herstellung von Kunststoffformteilen kann es durch thermische Spaltung des Polymerisats zur Rückbildung von Monomeren kommen. Bei zahlreichen Polymerisaten sind diese zumeist sehr reaktionsfähigen Monomere als gesundheitsschädlich einzustufen. Ferner kann das Formteil noch Spuren anderer Reaktionsnebenprodukte bzw. Spaltprodukte oder Additive wie Katalysatoren, Stabilisatoren, Emulgatoren, Treibmittel, etc. enthalten, die gesundheitsschädlich sein können.

Es ist aus Gründen des Gesundheitsschutzes wünschenswert, die Konzentration derartiger potentiell gesundheitsschädlicher Stoffe möglichst gering zu halten. Hierfür wurden verschiedene Methoden vorgeschlagen. Neben der Eliminierung der unerwünschten Substanzen durch Nachbehandlung des Formteils, die aber zeitaufwendig und herstellkostentreibend ist, wird vor allem der Zusatz von Substanzen, die die unerwünschten Substanzen chemisch binden, zur Reaktionsmischung oder zum Polymerisat während der Verarbeitung empfohlen.

GB-A 1 565 124 lehrt, bei der Herstellung von Polyurethanschäumen den einzelnen Reaktivkomponenten eine sogenannte Fängerverbindung für aromatische Amine, namentlich TDA (Toluylendiamin, Diaminotoluol), zuzusetzen. Aus den Beispielen geht als besonders wirksam der Zusatz von 0,5 bis 8 Gew.-% aliphatischem Diisocyanat hervor, wobei allerdings erst der Zusatz von ≥ 5 Gew.-% der kostspieligen aliphatischen Diisocyanate signifikante Erfolge erkennen lässt. Durch den Zusatz beträchtlicher Anteile aliphatischer Polyisocyanate werden jedoch gleichzeitig die mechanischen bzw. physikalischen Eigenschaften der auf aromatischen Polyisocyanaten basierenden Polyurethanschaumstoffe negativ beeinflusst.

Aus DE-A 199 19 826, DE-A 199 19 827, DE-A 199 28 675, DE-A 199 28 676, DE-A 199 28 687, DE-A 199 28 688 und DE-A 199 28 689 gehen eine Vielzahl kostengünstigerer Zusätze bzw. Hilfsmittel aus unterschiedlichen chemischen Verbindungsklassen hervor, mit denen die intermediäre Bildung primärer aromatischer Diamine wie TDA oder MDA (Methylendiphenylendiamin) bei der Herstellung von Polyurethanweichschaumstoffen reduziert werden soll. Auch hier werden den Reaktivkomponenten 1 bis 6 Gew.-% des Hilfsmittels zugegeben.

Ein genereller Nachteil des Zusatzes derartiger Hilfsmittel zur Kunststoffformulierung, die als "Fänger" für unerwünschte Substanzen wirken, besteht im Auftreten signifikanter Veränderungen der mechanischen bzw. chemisch-physikalischen Spezifikation des Endproduktes, was gegebenenfalls eine Neu- oder Weiterentwicklung der Zusammensetzung der Formulierung oder des Polymerisat-Rohmaterials erforderlich macht. Dies gilt umso mehr, als meist erhebliche Mengen des Hilfsstoffs zugesetzt werden müssen, um die unerwünschten Substanzen effektiv zu eliminieren.

Bei der Herstellung von Kunststoffformteilen treten in der Kontaktzone zwischen Kunststoffmasse und der Formenwand Wechselwirkungen auf, so dass sich - teilweise nur im Spurenbereich - die Zusammensetzung des Kunststoffs in dieser Randzone (Haut) von der Zusammensetzung im inneren Bereich (Kern) unterscheidet. Beispielsweise sind unmittelbar nach der Herstellung von Polyisocyanat-Polyadditionsprodukten auf Basis aromatischer Polyisocyanate die dem verwendeten Polyisocyanat chemisch zugrunde liegenden aromatischen Amine im Schaumstoff in Spurenkonzentrationen nachweisbar. Diese aromatischen Amine entstehen intermediär formal durch Hydrolyse der Isocyanatgruppen des eingesetzten Polyisocyanats unter Freisetzung von Kohlendioxid. Bei Polyurethan-Weichformschaumstoffen ist der Gehalt an diesen aromatischen Aminen in der Randzone (Haut) höher als im Inneren des Formteils (Kern).

Es ist also besonders wichtig, die Konzentration der unerwünschten Stoffe in der Randzone des Kunststoffformteils zu verringern. Dies ist auch deshalb erforderlich, weil die Oberflächen der Kunststoffformteile, insbesondere bei Gegenständen des tȧglichen Gebrauchs, die unmittelbaren Kontaktflächen zum Verarbeiter wie auch später zum Anwender darstellen

Es ist bekannt (WO 03/045656), dass sich die Konzentration unerwu̇nschter, insbesondere potentiell gesundheitsschadlicher Substanzen auf den Oberflȧchen und in der Randzone von Kunststoffformteilen effektiv verringern lässt, wenn bei der Formteilherstellung Trennmittel eingesetzt werden, die einen oder mehrere Zusatzstoffe enthalten, die mit den unerwünschten Substanzen reagieren und so als "Fänger" fu̇r diese unerwünschten Substanzen wirken

Zwar werden durch die in WO 03/045656 beschriebenen Trennmittelkompositionen die Gehalte an Aminkomponenten in der Randzone erniedrigt, diese sind jedoch noch immer in erheblichem Umfang vorhanden.

DE-A 3904810 offenbart ein Verfahren zur Herstellung von Kunststoffformteilen aus Polyurethan durch Umsetzung einer Zusammensetzung, die ein inneres Formtrennmittel enthält. Das innere Formtrennmittel besteht aus (A) einer Mischung bestehend aus i) einem organischen Amin, (ii) einem Ketimin, und iii) einem Metallsalz der Stearinsäure und (B) mindestens einer organischen Mono- und/oder Dicarbonsäure oder eines Carbonsäureanhydrids. Das innere Formtrennmittel ist Bestandteil der Polyolkomponente.

EP-A 0 218 175 offenbart ein Verfahren zur Herstellung von Kunststoffformteilen aus Polyurethan durch Umsetzung einer Zusammensetzung, die ein inneres Formtrennmittel enthält. Das innere Formtrennmittel besteht aus (A) einer Mischung aus i) einem organischen Amin und/oder cyclischen Lactams, (ii) einem Metallsalz der Stearin- und/oder Isocstearinsäure (iii) eines Metallsalzes einer organischen Mono-und/oder Dicarbonäure und (B) mindestens einer organischen Mono- und/oder Dicarbonsäure oder eines Carbonsäureanhydrids. Die Zusammensetzung des inneren Formtrennmittels bzw. das separat hergestellte innere Formtrennmittel ist Bestandteil der Polyolkomponente.

Aufgabe war es daher, den Gehalt an Aminkomponenten insbesondere in der Randzone von Kunststoffformteilen möglichst vollstandig zu reduzieren, ohne die mechanischen/physikahschen Eigenschaften der Formteile negativ zu beeinflussen.

Die Aufgabe konnte dadurch gelöst werden, dass bestimmte Zusatzmittel der Isocyanatkomponente bei der Polyurethanherstellung zugesetzt werden oder als Trennmittel oder Zusatz im Trennmittel und in der Isocyanatkomponente bei der Herstellung des Formteils eingesetzt werden.

Ein Gegenstand der Erfindung sind Kunststoffformteile aus Polyurethan, die in der Randzone Carbonsäureamide enthalten.

Ein weiterer Gegenstand der Erfindung ist ein Verfahren zur Herstellung der erfindungsgemaßen Kunststoffformteile aus Polyurethan, bei dem a) die Form mit einem externen Formtrennmittel vorbehandelt wird, b) m die vorbehandelte Form die zur Bildung des Formteils benotigte Menge an Reaktionskomponenten und Hilfs- und Zusatzstoffen eingebracht wird, wobei die Isocyanatkomponente 1 bis 10 Gew.-% mindestens einer Komponente (X) aus der Gruppe bestehend aus Anhydriden von Carbonsauren mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatome hat, und Polyanhydriden von Carbonsäuren und Polycarbonsäuren, vorzugsweise Dicarbonsauren, mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatomen hat, enthält, und das Formteil gebildet wird, und c) das gebildete Formteil anschließend aus der Form entnommen wird.

Darüberhinaus ist ein weiterer Gegenstand der Erfindung ein Verfahren zur Herstellung von Kunststoffformteilen aus Polyurethan gemaß Anspruch 1, bei dem dem externen Formtrennmittel in Verfahrensschritt a) mindestens eine Komponente (X) aus der Gruppe bestehend aus Anhydriden von Carbonsäuren mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatome hat, und Polyanhydriden von Carbonsauren und Polycarbonsäuren, vorzugsweise Dicarbonsauren, mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatomen hat, zugesetzt wird.

Ein weiterer Gegenstand der Erfindung ist auch die Verwendung der Komponente (X) als externes Formtrennmittel oder als Teil eines externen Formtrennmittels und als Zusatz zur Isocyanatkomponente bei der Herstellung von Polyurethanformteilen.

Die Anhydride leiten sich insbesondere von Ölsäure, Lmolsaure, Ricmolsaure, Tallöl, Stearinsäure, Palmitinsäure, Sojaölfettsäure, Cerotinsäure und Montansäure ab. Der weitere Kohlenwasserstoffrest des Anhydrids kann eine kürzere Kohlenstoffkette aufweisen und beispielsweise von Essigsäure, Ameisensäure, Propionsäure, Benzoesäure usw. abgeleitet sein. Möglich sind auch Anhydride mit den Säuren des Phosphors, des Schwefelsoder der Kohlensäure. Für Verfahren, bei denen der Kunststoff an formgebenden Oberflächen (Pressformen, Walzen, etc.) verarbeitet wird, ist s wichtig, dass das Endprodukt unbeschadet von der Oberfläche abgelöst bzw. aus der Form herausgelöst werden kann. Deshalb werden die formgebenden Oberflächen zwischen den einzelnen Verarbeitungschritten (bei Formen) bzw. kontinuierlich (bei Walzen mit einem Trennmittel beschichtet. Dieses verhindert das Verkleben des Kunststoffformteils mit der formgebenden Oberfläche.

Erfindungsgemäß können einem handelsüblichen Trennmittel ein oder mehrere Komponente (X) zugesetzt werden, die gegenüber den intermediär unerwünscht auftretenden Substanzen als "Fänger" auftreten, z.B. im Falle der Polyurethanweichformschaumstoffe in der Randzone aromatische Amine chemisch binden. Es konnte überraschend festgestellt werden, dass derartige modifizierte Trennmittel die Bildung dieser unerwünschten Substanzen in der Randzone von Kunststoffformteilen effektiv und nahezu quantitativ unterbinden, wobei die ursprüngliche Wirkung des Trennmittels (Gewährleistung der Entformbarkeit, d.h. beschädigungsfreies Herausnehmen des Kunststoffformteils aus der Form sowie die gewünschte Porenstruktur) erhalten bleibt. Insbesondere lassen sich so bei der Herstellung von Polyurethanweichformschaumstoffen die im Vergleich zum Kern hohen Konzentrationen an aromatischen Aminen in der Haut sowohl direkt nach der Herstellung wie auch nach Lagerung deutlich verringern.

Da die Zellstruktur durch die genannten Zusatzmittel (Komponente X) nicht gestört wird, können diese Zusatzmittel auch in der Polyol- und/oder der Isocyanatkomponente eingesetzt werden.

Die Zusatzstoffe können auch ohne weitere externe Trennmittel bei der Herstellung von Polyurethan-Polyadditionsprodukten eingesetzt werden.

Die erfindungsgemäß eingesetzten Zusatzmittel haben einen symmetrischen oder asymmetrischen Aufbau, wie z.B. Ölsäureanhydrid, Stearinsäureanhydrid, Polyricinolsäureanhydrid, Stearinsäureanhydrid, Adipinsäure-Ölsäure-Anhydrid, Ölsäureessigsäureanhydrid, Adipinsäure-ricinolsäurepolyanhydridester, Oleylacetylanhydrid, Oleylformylanhydrid, Oleylbenzoylanhydrid, Acetylstearinsäureanhydrid, Essigsäuremontanoylanhydrid, Essigsäureicinolsäureanhydridacetylester, Esteranhydride auf der Basis von Dicarbonsäuen wie Adipinsäure und Monocarbonsäuren wie Ölsäure, Ricinolsäure oder Maleinsäure-Ölsäureanyhdrid.

Einsetzbar sind auch Anhydride auf der Basis mindestens einer langkettigen Carbonsäure und Kohlensäure oder Pyrokohlensäure wie Dioleylcarbonat, Dioleylpyrokohlensäureester, Oleylacetylcarbonat, Oleylacetylpyrokohlensäureester.

Die Herstellung der Polyurethane erfolgt aus Polyisocyanaten und langkettigen Polyetherpolyolen, die durch basenkatalysierte Polyaddition oder mittels DMC-Katalyse (EP-A 1 194 468) hergestellt werden, unter Mitverwendung von Treibmitteln, Katalysatoren, Stabilisatoren und ggf. weiteren Hilfs- und Zusatzstoffen.

Neben den langkettigen Polyetherpolyolen können in der Polyolformulierung zur Herstellung der Polyurethane weitere hydroxylgruppenhaltige Verbindungen (Polyole) eingesetzt werden. Diese an sich bekannten Polyole werden z.B. ausführlich beschrieben in Gum, Riese & Ulrich (Hrsg.): "Reaction Polymers", Hanser Verlag, München 1992, S. 66-96 und G. Oertel (Hrsg.): "Kunststoffhandbuch, Band 7, Polyurethane", Hanser Verlag, München 1993, S. 57-75. Bespiele geeigneter Polyole finden sich in den genannten Literaturstellen sowie in US-A 3 652 639, US-A 4 421 872 und US-A 4 310 632.

Bevorzugt eingesetzte Polyole sind Polyetherpolyole (insbesondere Poly(oxyalkylen)polyole) und Polyesterpolyole.

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Beispielhaft seien genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- und p-Toluidin, α,β- Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m-, und p-Phenylendiamin, 2,4-, 2,6-Toluylendiamin, 2,2'-, 2,4- und 4,4'-Diaminodiphenylmethan und Diethylendiamin.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen.

Verfahren zur Herstellung solcher Polyetherpolyole werden in "Kunststoffhandbuch, Band 7, Polyurethane", in "Reaction Polymers" sowie z.B. in US-A 1 922 451, US-A 2 674 619, US-A 1 922 459, US-A 3 190 927 und US-A 3 346 557 beschrieben.

Solche Polyetherpolyole können auch unter Mitverwendung von füllstoffhaltigen Polyolen wie z.B. Polymerpolyolen (Styrol-Acrylnitril-Copolymerisate) oder Polyharnstoff-Dispersion-Polyolen etc. für die Herstellung von Polyurethan-Weichschäumen eingesetzt werden.

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt.

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure, Fumarsäure oder Maleinsäure.

Als mehrfunktionelle Hydroxylverbindungen können beispielsweise verwendet werden: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Triethylolpropan oder Glycerin.

Die Herstellung der Polyesterpolyole kann weiterhin auch durch Ringöffnungspolymerisation von Lactonen (z.B. Caprolacton) mit Diolen und/oder Triolen als Starter erfolgen.

Zusätzlich kann bei der Herstellung der erfindungsgemäßen Polyurethane eine Vernetzerkomponente zugesetzt werden. Als derartige Vernetzer sind z.B. Diethanolamin, Triethanolamin, Glycerin, Trimethylolpropan (TMP), Addukte von solchen Vernetzerverbindungen mit Ethylenoxid und/oder Propylenoxid mit einer OH-Zahl < 1.000 oder auch Glykole mit einem zahlenmittleren Molekulargewicht ≤ 1.000 brauchbar. Besonders bevorzugt sind Triethanolamin, Glycerin, TMP oder niedrige EO- und/oder PO-Addukte hiervon.

Weiterhin können gegebenenfalls bekannte Hilfs-, Zusatz- und/oder Flammschutzmittel zugesetzt werden. Unter Hilfsstoffen werden dabei insbesondere an sich bekannte Katalysatoren und Stabilisatoren verstanden. Als Flammschutzmittel ist z.B. Melamin einsetzbar.

Gegebenenfalls zuzusetzende Katalysatoren sind an sich bekannt. Beispielhaft genannt seien tertiäre Amine wie Triethylamin, Tributylamin, N-Methylmorpholin, N-Ethyl-morpholin, N,N,N',N'-Tetramethylethylendiamin, Pentamethyldiethylentriamin und höhere Homologe (DE-A 26 24 527 und DE-A 26 24 528), 1,4-Diaza-bicyclo[2,2,2]octan, N-Methyl-N'-dimethylaminoethyl-piperazin, Bis(dimethylaminoalkyl)-piperazine (DE-A 26 36 787), N,N-Dimethylbenzyl-amin, N,N-Dimethylcyclohexylamin, N,N-Diethylbenzyl-amin, Bis(N,N-diethylaminoethyl)adipat, N,N,N',N'-Tetramethyl-1,3-butandiamin, N,N-Dimethyl-β-phenyl-ethyl-amin, 1,2-Dimethylimidazol, 2-Methylimidazol, monocyclische und bicyclische Amidine (DE-A 17 20 633), Bis(dialkylamino)alkylether (US-A 3 330 782, DE-A 10 30 558, DE-A 18 04 361 und DE-A 26 18 280) sowie Amidgruppen (vorzugsweise Formamidgruppen) aufweisende tertiäre Amine gemäß DE-A 25 23 633 und DE-A 27 32 292. Als Katalysatoren kommen auch an sich bekannte Mannichbasen aus sekundären Aminen, z.B. Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenolen in Frage. Gegenüber Isocyanatgruppen aktive Wasserstoffatome aufweisende, als Katalysator einsetzbare tertiäre Amine sind z.B. Triethanolamin, Triisopropanolamin, N-Methyl-diethanolamin, N-Ethyl-diethanolamin, N,N-Dimethylethanolamin, deren Umsetzungsprodukte mit Alkylenoxiden wie Propylenoxid und/oder Ethylenoxid sowie sekundär-tertiäre Amine gemäß DE-A 27 32 292. Als Katalysatoren kommen ferner Silaamine mit Kohlenstoff-Silizium-Bindungen in Frage, wie sie z.B. in der DE-A 12 29 290 beschrieben sind, z.B. 2,2,4-Trimethyl-2-silamorpholin und 1,3-Diethyl-aminomethyltetramethyldisiloxan. Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-A 17 69 043). Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung sind in DE-A 20 62 286, DE-A 20 62 289, DE-A 21 17 576, DE-A 21 29 198, DE-A 23 30 175 und DE-A 23 30 211 beschrieben. Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinnmercaptid (DE-A 17 69 367; US-A 3 645 927) vorzugsweise Zinn(II)salze von Carbonsäuren wie Zinn(II)acetat, Zinn(II)octoat, Zinn(II)ethylhexanoat und Zinn(II)laurat und Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen (DE-A 24 34 185, DE-A 26 01 082 und DE-A 26 03 834). Auch können als Katalysatoren sogenannte polymere Katalysatoren, wie sie in der DE-A 42 18 840 beschrieben werden, eingesetzt werden. Bei diesen Katalysatoren handelt es sich um in der Alkalisalz-Form vorliegende Umsetzungsprodukte von tri- oder höherfunktionellen Alkoholen mit (zahlenmittleren) Molekulargewichten von 92 bis 1.000 mit intramolekularen Carbonsäureanhydriden. Die Umsetzungsprodukte weisen (im statistischen Mittel) mindestens 2, vorzugsweise 2 bis 5 Hydroxylgruppen und mindestens 0,5, vorzugsweise 1,0 bis 4 Carboxylatgruppen auf, wobei die Gegenionen zu den Carboxylatgruppen Alkalikationen sind. Bei den "Umsetzungsprodukten" der Ausgangskomponenten kann es sich wie aus dem Gehalt an Carboxylatgruppen ersichtlich, auch um Gemische aus echten Umsetzungsprodukten mit überschüssigen Mengen an Alkoholen handeln. Geeignete mehrwertige Alkohole zur Herstellung der Umsetzungsprodukte sind beispielsweise Glycerin, Trimethylolpropan, Sorbit, Pentaerythrit, Gemische derartiger mehrwertiger Alkohole, Alkoxylierungsprodukte von Alkoholen mit (zahlenmittleren) Molekulargewichten von 92 bis 1.000 oder von Gemischen derartiger Alkohole, wobei bei der Alkoxylierung Propylenoxid und/oder Ethylenoxid in beliebiger Reihenfolge oder im Gemisch, vorzugsweise jedoch ausschließlich Propylenoxid zum Einsatz gelangen. Geeignete intramolekulare Carbonsäureanhydride zur Herstellung der Umsetzungsprodukte sind beispielsweise Maleinsäureanhydrid, Phthalsäureanhydrid, Hexahydrophthalsäureanhydrid, Bernsteinsäureanhydrid, Pyromellitsäureanhydrid oder beliebige Gemische derartiger Anhydride. Maleinsäureanhydrid wird besonders bevorzugt eingesetzt. Weitere Vertreter von zu verwendenden Katalysatoren sowie Einzelheiten über die Wirkungsweise der Katalysatoren sind im Vieweg und Höchtlen (Hrsg.): Kunststoff-Handbuch, Band VII, Carl-Hanser-Verlag, München 1966, S. 96 -102 beschrieben.

Die Katalysatoren werden in der Regel in Mengen von etwa 0,001 bis 10 Gew.-%, bezogen auf die Gesamtmenge an Verbindungen mit mindestens zwei gegenüber Isocyanaten reaktionsfähigen Wasserstoffatomen eingesetzt.

Weitere gegebenenfalls eingesetzte Zusatzstoffe sind oberflächenaktive Zusatzstoffe wie Emulgatoren und Schaumstabilisatoren. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, zum Einsatz. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in US-A 2 834 748, US-A 2 917 480 und US-A 3 629 308 beschrieben. Von besonderem Interesse sind vielfach über Allophanatgruppen verzweigte Polysiloxan-Polyoxyalkylen-Copolymere gemäß DE-A 25 58 523.

Weitere mögliche Zusatzstoffe sind Reaktionsverzögerer, z.B. sauer reagierende Stoffe wie Salzsäure oder organische Säurehalogenide, ferner an sich bekannte Zellregler wie Paraffine oder Fettalkohole oder Dimethylpolysiloxane sowie an sich bekannte Pigmente oder Farbstoffe und Flammschutzmittel, z.B. Trichlorethylphosphat, Trikresylphosphat oder Ammoniumphosphat und - polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in Vieweg und Höchtlen (Hrsg.): Kunststoff-Handbuch, Band VII, Carl-Hanser-Verlag, München 1966, S. 103 - 113 beschrieben.

Als gegebenenfalls einzusetzende Treibmittelkomponente sind alle bei der Polyurethan-Schaumstoffherstellung bekannten Treibmittel möglich. Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel z.B. Luft, CO₂ oder N₂0, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Besonders bevorzugt werden als Treibmittel wasserstoffhaltige Fluoralkane (HFCKW's) sowie niedere Alkane wie z.B. Butan, Pentan, Isopentan, Cyclopentan, Hexan, Iso-Hexan, gegebenenfalls in Abmischung untereinander und/oder unter Zusatz von Wasser verwendet. Weitere Beispiele für Treibmittel sowie Einzelheiten über die Verwendung, von Treibmitteln sind in Vieweg und Höchtlen (Hrsg.): Kunststoff-Handbuch, Band VII, Carl-Hanser-Verlag, München 1966, S. 108f, S. 453ff und S. 507ff beschrieben. Bevorzugt ist jedoch Wasser bzw. CO₂ das alleinige Treibmittel Als Polyisocyanate kommen aliphatische, cycloaliphatische, araliphatische, aromatische und heterocyclische Isocyanate, bevorzugt Di- oder Polyisocyanate in Frage, wie sie in Justus Liebigs Annalen der Chemie 562 (1949) 75 beschrieben werden, beispielsweise solche der Formel Q(NCO)ₙ, in der n eine ganze Zahl von 2 bis 4, vorzugsweise 2, und Q einen aliphatischen Kohlenwasserstoffrest mit 2 bis 18, vorzugsweise 6 bis 12 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeuten. Bevorzugt sind die technisch leicht zugänglichen Polyisocyanate, z.B. 1,6-Hexamethylendiisocyanat, Isophorondiisocyanat (IPDI), 4,4'-Dicyclohexamethylenmethandiisocyanat (H₁₂-MDI), Duroldiisocyanat, 1,4-Di-(iso-cyanatomethyl)cyclohexan, 1,3-Bis-(isocyanato-1-methylethyl)-benzol ("TMXDI"), das 2,4- und 2,6-Toluylendiisocyanat sowie beliebige Gemische dieser Isomeren ("TDI", z.B. Desmodur^{®} T80, Bayer AG), Polyphenyl-polymethylen-polyisocyanate, wie sie durch Anilin-Formaldehyd-Kondensation und anschließende Phosgenierung hergestellt werden ("rohes MDI", z.B. Desmodur^{®} 44V20L, Bayer AG), Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat bzw. vom 1,6-Hexamethylendiisocyanat und/oder Isophorondiisocyanat ableiten. Die organischen Di- und Polyisocyanate können einzeln oder in Form ihrer Mischungen eingesetzt werden. Besonders bevorzugt sind TMXDI und cycloaliphatische Diisocyanate, insbesondere IPDI, 1,4-Di(isocyanatomethyl)cyclohexan und H₁₂-MDI (z.B. Desmodur^{®} W, Bayer AG).

Formtrennmittel sind Verarbeitungsadditive, durch deren Verwendung die Adhäsionskräfte zwischen zwei aneinander grenzenden Oberflächen (z.B. Formteil und Form) verringert werden, d.h. ihr Verkleben verhindert wird, indem das Formtrennmittel zwischen beiden Oberflächen einen leicht trennbaren Film ausbildet. Formtrennmittel werden in Form von Dispersionen (Emulsionen oder Suspensionen), Sprays, Pasten, Pulvern und permanenten, meist eingebrannten Trennmittelfilmen angewendet. Für die Kunststoffverarbeitung und Formschaumherstellung kommen vor allem Silicone (in Form von Ölen, Öl-Emulsionen in Wasser, Fetten, Harzen), Wachse (im wesentlichen natürliche oder synthetische Paraffine mit oder ohne funktionelle Gruppen), Metallseifen,Fette und Polymere zur Anwendung. Für die Auswahl des jeweils besten Trennmittels aus verarbeitungstechnischer Sicht ist nicht nur die Grundkenntnis des PUR-Systems notwendig, sondern auch die Art des Werkzeugmaterials, dessen Oberflächenbeschaffenheit und die Formteilgeometrie maßgebend.

Geeignete Trennmittel sind kommerziell erhältlich und werden beispielsweise angeboten von der ACMOS Chemie GmbH & Co. (z.B. Acmos^{®} 180-52), der RATEC International GmbH (z.B. PURA^{®} 1448H), der Firma Gorapur (z.B. Gorapur^{®} RT 835C, Gorapur^{®} LK 149, Gorapur^{®} LK 888, Gorapur^{®} LH 525, Gorapur^{®} LH 157A, Gorapur^{®} RT 2130B, Gorapur^{®} RT 1126B), der Marbo Italia S.A. (z.B. Marbo^{®} WR 95101/A) und der Productos Concentrol S.A. (z.B. Concentrol^{®} WB33A).

Wird bei der Herstellung der Polyurethanformteile ein Trennmittel verwendet, das mindestens eines der erfindungsgemäßen Komponenten (X) mit Anhydrid-Struktur zu einem Anteil von 10 Gew.% bis zu 100 Gew.-%, bevorzugt 15 Gew.-% bis 90 Gew.%, besonders bevorzugt 50 Gew.-% bis 90 Gew.-%, enthält, weist die Randzone des Formteils eine fast nicht mehr nachweisbare Konzentration des dem verwendeten Polyisocyanat chemisch zugrunde liegenden aromatischen Amins auf. Als besonders wirksam haben sich diese Komponenten (X) bei der Herstellung von Polyurethanweichformschaumstoffteilen erwiesen, bei denen als Isocyanatkomponente aromatische Polyisocyanate eingesetzt werden.

Besonders bevorzugt wird das Verfahren zur Herstellung von Kunststoffformteilen, bevorzugt von Kunststoffformteilen aus Reaktivkunststoffen, insbesondere Polyurethanen, besonders bevorzugt von Polyurethanformschäumen, insbesondere Polyurethanweichformschaumstoffen und Integralschaum, so durchgeführt, dass
a) die Form mit dem erfindungsgemäßen Trennmittel vorbehandelt wird,
b) in die vorbehandelte Form die zur Bildung des Formteils benötigte Kunststoffmasse eingebracht und das Formteil gebildet wird, und
c) das gebildete Formteil anschließend entnommen wird.

Geeignete Formen zur Herstellung von Kunststoffformteilen sind dem Fachmann im Prinzip bekannt. In der Regel bestehen sie aus Metall, beispielsweise Stahl (z.B. Schwarzblech), Feingusslegierung oder Aluminium (z.B. Aluminiumblech oder Aluminiumguss) oder aus Kunststoff (z.B. Epoxidharz oder faserverstärktem Polyester). Je nach verwendetem Kunststoff und herzustellendem Formteil kann die Herstellung der Formteile in offenen oder geschlossenen, beheizten oder unbeheizten Formen erfolgen.

Die Behandlung der Form mit dem erfindungsgemäßen Trennmittel erfolgt in der dem Fachmann im Prinzip bekannten Weise, z.B. durch Aufsprühen, mit Druckluft in die geöffnete Form oder durch Aufstreichen mit einem Pinsel, Schwamm oder Tuch. Hierbei kommt es weniger auf die Menge des Trennmittels als auf einen gleichmäßigen Auftrag an.

In die vorbehandelte Form wird die zur Bildung des Formteils benötigte Kunststoffmasse eingebracht und das Formteil gebildet. Dies geschieht durch die dem Fachmann geläufigen Verfahren. Für die Herstellung von Schaumstoffen, z.B. PUR-Schaumstoffen, Polystyrol-Schaumstoffen (EPS), Styrol-Copolymer-Schaumstoffen, Polyisocyanurat-Schaumstoffen, Polycarbodiimid-Schaumstoffen, PVC-Schaumstoffen, Polycarbonat-Schaumstoffen, Polyolefin-Schaumstoffen, Polymethacrylimid-Schaumstoffen, Polyamid-Schaumstoffen, ABS-Schaumstoffen, Phenol- und Harnstoffharz-Schaumstoffen (UF-Schäume), eignen sich vor allem Spritzguss, Reaction Injection Molding' (RIM bzw. RRIM) und Blasformen bzw. Folienblasen.

Die Erfindung soll anhand der nachfolgenden Beispiele näher erläutert werden.

### Beispiele

Zur Bestimmung der Konzentration an aromatischen Aminen an der Oberfläche von Formteilen aus Polyurethanweichformschaum wurde von den frisch hergestellten Formteilen nach einer definierten Lagerzeit (Lagerung im Dunkeln und in Kontakt mit Luft) die Haut-Zone (Randschicht, Dicke 1 mm) abgetrennt und mittels der ISOPA I.I.I.-Nachweismethode auf TDA (ISOPA I.I.I. ref. 11397, "robust method for the determination of toluene diamine content of flexible foams") bzw. MDA (ISOPA I.I.I. ref. 11399, "robust method for the determination of the diaminodiphenylmethane content of flexible polyurethane foams") analysiert. Die in den Beispielen angegebenen TDA- bzw. MDA-Gehalte entsprechen den Absolutgehalten (in ppm) in der Randschicht des Formschaumteils.

### Standardrezeptur AA

### Herstellung eines Polyurethan-Weichformschaumstoffes auf MDI-Basis:

Es wurde eine Polyolmischung (A-Komponente) aus den nachfolgend aufgeführten Einsatzstoffen hergestellt:
- 50 Gew.-Teile: eines Polyetherpolyols mit einer Hydroxylzahl (OHZ) von 35 mg KOH/g, einer mittleren Funktionalität von 2,6 und einem Ethylenoxid (EO)/Propylenoxid (PO)-Verhältnis von 14/86 mit 75 % primären OH-Gruppen.
- 50 Gew.-Teile: eines Polyetherpolyols mit einer Hydroxylzahl (OHZ) von 28 mg KOH/g, einer mittleren Funktionalität von 2,4 und einem Ethylenoxid (EO)/Propylenoxid (PO)-Verhältnis von 14/86 mit 80 % primären OH-Gruppen.
- 3,45 Gew.-Teile: Wasser
- 0,26 Gew.-Teile: Treibkatalysator (Dabco^{®} BL-11, Air Products)
- 0,35 Gew.-Teile: Gelkatalysator (Dabco^{®} 33LV, Air Products)
- 0,53 Gew.-Teile: Diethanolamin (DEOA)
- 0,3 Gew.-Teile: Silikonstabilisator (Tegostab^{®} B 8715LF, Degussa-Goldschmidt AG)
- 1,5 Gew.-Teile: eines Polyetherpolyols mit einer Hydroxylzahl (OHZ) von 37 mg KOH/g, einer mittleren Funktionalität von 2,9 und einem Ethylenoxid (EO)/Propylenoxid (PO)-Verhältnis von 72/28 mit 80 % primären OH-Gruppen.

Diese A-Komponente wurde bei einer Temperatur von 25°C mit einer Mischung aus 18 Gew.-% pMDI und 82 Gew.-% eines Gemischs aus 2,4'-MDI und 4,4'-MDI im Verhältnis von 2,3 : 1 (NCO-Gehalt 32,5 Gew.-%; B-Komponente) vermischt. Zur Herstellung von Formteilen wurde das Gemisch in eine auf 60°C temperierte, mit einem Trennmittel (Acmos^{®} 180-52, ACMOS Chemie GmbH & Co) behandelte 9,5-Liter-Form gegeben und dort aufgeschäumt. Die Menge des Gemisches wurde dabei so bemessen, ass die resultierenden Formteile eine Formteildichte von 55 kg/m³ aufweisen. Zur Herstellung von Formteilen mit Index 80 (Rezeptur AA) betrug das Gewichtsverhältnis von A-Komponente zu B-Komponente 100:45. Die Form wurde mit einem Deckel verschlossen und in eine Presse oder Schließe eingebracht, um dem Schäumdruck entgegenzuwirken und das Werkzeug geschlossen zu halten. Nach 5 Minuten wurde der Deckel entfernt und der Schaumstoff durch mechanisches Zusammendrücken solange bearbeitet, bis der Schaum offenzellig, d.h. schrumpffrei war.

MDA-Gehalte der Hautzone der Formteile:

| Standard | Index | 4,4'-MDA [ppm]^{a)} | 2,4'-MDA [ppm]^{a)} | 2,2'-MDA [ppm]^{a)} | 4,4'-MDA [ppm]^{b)} | 2,4'-MDA [ppm]^{b)} | 2,2'-MDA [ppm]^{b)} |
|---|---|---|---|---|---|---|---|
| AA | 80 | 1,8 | 63 | 5,4 | 0,3 | 5,4 | 0,9 |

| | | | | | | | |
|---|---|---|---|---|---|---|---|
| ^{a)} Lagerzeit 24h ^{b)} Lagerzeit 7 Tage | | | | | | | |

Mechanische Eigenschaften der Formteile (gemessen nach 7 Tagen):

| Standard | Index | Dichte [kg/m³] | CLD 4/40 [kPa] | Zugspannung [kPa] | Bruchdehnung [%] | DVR 50% [%] | DVR 75% [%] |
|---|---|---|---|---|---|---|---|
| AA | 80 | 50,1 | 4,3 | 106 | 113 | 6,3 | 7,9 |

| | | | | | | | |
|---|---|---|---|---|---|---|---|
| CLD 4/40: Stauchhärte 4.Zyklus bei 40 % Verformung nach DIN EN ISO 3386-1-98. DVR: Druckverformungsrest bei 50 % bzw. 75 % Verformung (DIN EN ISO 1856). Zugspannung, Bruchdehnung nach DIN EN ISO 1798. | | | | | | | |

### Beispiel 1

Analog Standardrezeptur AA wurden Weichformschaumstoffteile hergestellt. Statt mit handelsüblichen Trennmitteln wurde die Form mit einer Mischung aus der in der Tabelle angegebenen Menge in Gew.-% Acmos^{®} 180-52 und der in der Tabelle angegebenen Menge in Gew.-% des erfindungsgemäßen Zusatzstoffes in der üblichen Weise vorbehandelt. Die Ergebnisse sind in den nachfolgenden Tabellen zusammengefasst.

MDA-Gehalte der Hautzone der Formteile:

| Bsp. | Index | Aufbau des Trennmittels in Gew.-% | | 4,4'-MDA [ppm]^{a)} | 2,4'-MDA [ppm]^{a)} | 2,2'-MDA [ppm]^{a)} |
|---|---|---|---|---|---|---|
| | | Acmos 180-52 | AMF | | | |
| 1a (Vgl.) | 80 | 75 | 25 AMF 1 | 0,5 | 3,8 | 4,8 |
| 1b (Vgl.) | 80 | 50 | 50 AMF1 | < 0,2 | < 0,2 | < 0,2 |
| 1c (Vgl.) | 80 | 25 | 75 AMF5 | < 0,2 | 1,6 | 2,4 |

| | | | | | | |
|---|---|---|---|---|---|---|
| AMF 1: Aminfänger 1, AMF 5: Aminfänger 5, ^{a)} Lagerzeit 24h (Vgl.): vergleich | | | | | | |

Mechanische Eigenschaften der Formteile (gemessen nach 7 Tagen):

| Bsp. | Index | Dichte [kg/m³] | CLD 4/40 [kPa] | Zugspannung [kPa] | Bruchdehnung [%] | DVR 50% [%] | DVR 75% [%] |
|---|---|---|---|---|---|---|---|
| 1a (Vgl.) | 80 | 52,3 | 4,6 | 112 | 118 | 6,1 | 7,8 |
| 1b (Vgl.) | 80 | 51,4 | 4,4 | 108 | 122 | 6,3 | 8,1 |
| 1c (Vgl.) | 80 | 51,8 | 4,5 | 106 | 124 | 6,3 | 8,0 |

| | | | | | | | |
|---|---|---|---|---|---|---|---|
| CLD 4/40: Stauchhärte 4.Zyklus bei 40 % Verformung nach DIN EN ISO 3386-1-98. DVR: Druckverformungsrest bei 50 % bzw. 75 % Verformung (DIN EN ISO 1856). Zugspannung, Bruchdehnung nach DIN EN ISO 1798. | | | | | | | |

Die Isocyanatkomponente der Standardrezeptur AA wurde mit 1 Gew.-% eines Aminfängers 2 (AMF 2) versetzt und verschäumt, wobei als Trennmittel handelsübliches Acmos^{®} 180-52 verwendet wurde. Zur Herstellung von Formteilen mit Index 80 (Standard AA) beträgt das Gewichtsverhältnis von A-Komponente zu B-Komponente 100:45,4. Die Ergebnisse sind in der nachfolgenden Tabelle zusammengefasst.

MDA-Gehalte in der Randzone der Formteile (Lagerzeit 24 h)

| Bsp. | Index | Aufbau des Trennmittels in Gew.-% | | 4,4'-MDA [ppm]^{a)} | 2,4'-MDA [ppm]^{a)} | 2,2'-MDA [ppm]^{a)} |
|---|---|---|---|---|---|---|
| | | Acmos 180-52 | AMF | | | |
| 1d | 80 (MDI + 1 % AMF 2) | 100 | - | < 0,2 | 21,5 | 6 |

| | | | | | | |
|---|---|---|---|---|---|---|
| AMF 2: Aminfänger 2 | | | | | | |

### Standardrezeptur BB

### Herstellung eines Polyurethan-Weichformschaumstoffes auf TDI-Basis:

Es wurde eine Polyolmischung (A-Komponente) aus den nachfolgend aufgeführten Einsatzstoffen hergestellt:
- 70 Gew.-Teile: eines Polyols mit der Hydroxylzahl (OHZ) von 29 mg KOH/g, einer mittleren Funktionalität von 3,4 und einem Ethylenoxid (EO)/Propylenoxid (PO)-Verhältnis von 18/82 mit 85 % primären OH-Gruppen.
- 30 Gew.-Teile: eines Polyols, mit der Hydroxylzahl (OHZ) von 20 mg KOH/g, einer mittleren Funktionalität von 2,7 und einem Ethylenoxid (EO)/Propylenoxid (PO)-Verhältnis von 20/80 mit 85 % primären OH-Gruppen und einem Füllstoffgehalt (polymerisiertes Styrol / Acrylnitril im Verhältnis 7 : 4) von 43 Gew.-%.
- 3,0 Gew.-Teile: Wasser
- 0,12 Gew.-Teile: Treibkatalysator (Dabco^{®} BL-11, Air Products)
- 0,28 Gew.-Teile: Gelkatalysator (Dabco^{®} 33LV, Air Products)
- 0,8 Gew.-Teile: Diethanolamin (DEOA)
- 0,8 Gew.-Teile: Silikonstabilisator (Tegostab^{®} B 8719LF, Degussa-Goldschmidt AG)

Diese A-Komponente wurde bei einer Temperatur von 25°C mit TDI eines NCO-Gehalts von 48,3 Gew.-% (B-Komponente: Desmodur^{®} T80, Bayer AG) vermischt. Zur Herstellung von Formteilen wurde das Gemisch in eine auf 60°C temperierte, mit einem Trennmittel (Acmos^{®} 180-52, ACMOS Chemie-GmbH & Co) behandelte 9,5-Liter-Form gegeben und dort aufgeschäumt. Die Menge des Gemisches wurde dabei so bemessen, dass die resultierenden Formteile eine Formteildichte von 43 kg/m³ aufweisen. Zur Herstellung von Formteilen mit Index 80 (Standard BB) betrug das Gewichtsverhältnis von A-Komponente zu B-Komponente 100:27. Die Form wurde mit einem Deckel verschlossen und in eine Presse oder Schließe eingebracht, um dem Schäumdruck entgegenzuwirken und das Werkzeug geschlossen zu halten. Nach 6 Minuten wurde der Deckel entfernt und der Schaumstoff durch mechanisches Zusammendrücken solange bearbeitet, bis der Schaum offenzellig, d.h. schrumpffrei war.

TDA-Gehalte der Hautzone der Formteile:

| Standard | Index | 2,4-TDA [ppm]^{a)} | 2,6-TDA [ppm]^{a)} |
|---|---|---|---|
| BB | 80 | 5,3 | 363 |

| | | | |
|---|---|---|---|
| a) Lagerzeit 24h | | | |

Mechanische Eigenschaften der Formteile (gemessen nach 7 Tagen):

| Standard | Index | Dichte [kg/m³] | CLD 4/40 [kPa] | Zugspannung [kPa] | Bruchdehnung [%] | DVR 50% [%] | DVR75% [%] |
|---|---|---|---|---|---|---|---|
| BB | 80 | 42 | 2,8 | 153 | 124 | 4,8 | 7,3 |

| | | | | | | | |
|---|---|---|---|---|---|---|---|
| CLD4/40: Stauchhärte 4.Zyklus bei 40 % Verformung nach DIN EN ISO 3386-1-98. DVR: Druckverformungsrest bei 50 % bzw. 75 % Verformung (DIN EN ISO 1856). Zugspannung, Bruchdehnung nach DIN EN ISO 1798. | | | | | | | |

### Beispiel 2

Analog Standardrezeptur BB wurden Weichformschaumstoffteile hergestellt. Statt mit handelsüblichen Trennmitteln wurde die Form mit einer Mischung aus Acmos^{®} 180-52 und verschiedenen Konzentrationen der erfindungsgemäßen Zusatzmittel in der üblichen Weise vorbehandelt. Die Ergebnisse sind in der nachfolgenden Tabelle zusammengefasst.

TDA-Gehalte der Hautzone der Formteile:

| Bsp. | Index | Acmos^{®} 180-52 [Gew.-%] | AMF 2 [Gew.-%] | 2,4-TDA [ppm]^{a)} | 2,6-TDA [ppm]^{a)} |
|---|---|---|---|---|---|
| 2a (Vgl.) | 80 | 50 | 50 | 0,4 | 90,4 |
| 2b (Vgl.) | 80 | 25 | 75 | 0,2 | 20,6 |

| | | | | | |
|---|---|---|---|---|---|
| AMF2: Aminfänger 2 ^{a)} Lagerzeit 24h (Vgl.) : Vergleich | | | | | |

Die Isocyanatkomponente der Standardrezeptur BB wurde zusätzlich mit 10 Gew.-% des Aminfängers 2 (AMF 2) versetzt und analog Beispiel 2 ein Teil hergestellt, wobei das Trennmittel gemäß Zusammensetzung 2 b verwendet wurde.

TDA-Gehalte in der Randzone der Formteile (Lagerzeit 24 h)

| Bsp. | Index | Acmos^{®} 180-52 [Gew.-%] | AMF 2 [Gew.-%] | 2,4-TDA [ppm] | 2,6-TDA [ppm] |
|---|---|---|---|---|---|
| 2 c | 80 (TDI + 10 % AMF2) | 25 | 75% | < 0,2 | < 0,2 |

| | | | | | |
|---|---|---|---|---|---|
| AMF 2: Aminfänger 2 | | | | | |

Der Gehalt an Aminen liegt durch Verwendung der Aminfänger im Trennmittel und/oder im Isocyanat unter der Nachweisgrenze.

Eine Messung des Amingehaltes der Randzone ca. 2 Stunden nach der Herstellung des Schaumstoffs ergab bereits Amingehalte unter der Nachweisgrenze.

Die Isocyanatkomponente der Standardrezeptur BB wurde mit 1 bzw. 10 Gew.-% eines Aminfängers (AMF) versetzt und verschäumt, wobei als Trennmittel handelsübliches Acmos^{®} 180-52 verwendet wurde. Zur Herstellung von Formteilen mit Index 80 (Standard BB) beträgt das Gewichtsverhältnis von A-Komponente zu B-Komponente 100:29,6. Die Ergebnisse sind in der nachfolgenden Tabelle zusammengefasst.

TDA-Gehalte in der Randzone der Formteile (Lagerzeit 24 h)

| Bsp. | Index | Acmos^{®} 180-52 [Gew.-%] | 2,4-TDA [ppm] | 2,6-TDA [ppm] |
|---|---|---|---|---|
| 2 d | 80 (TDI + 10 % AMF3) | 100 | < 0,2 | 0,4 |
| 2 e | 80 (TDI + 10 % AMF4) | 100 | < 0,2 | 0,4 |
| 2 g | 80 (TDI + 1 % AMF2) | 100 | 2,1 | 168 |

| | | | | |
|---|---|---|---|---|
| AMF 2· Aminfänger 2 AMF 3· Aminfänger 3 AMF 4· Aminfänger 4 | | | | |

### Standardrezeptur CC

### Herstellung eines Polyurethan-Weichformschaumstoffes auf TDI/MDI-Basis·

Es wurde eine Polyolmischung (A-Komponente) aus den nachfolgend aufgefu̇hrten Einsatzstoffen hergestellt·
- 55 Gew.-Teile: eines Polyols mit der Hydroxylzahl (OHZ) von 28 mg KOH/g, einer mittleren Funktionalitat von 2,4 und einem Ethylenoxid (EO)/Propylenoxid (PO)-Verhältnis von 18/82 mit 85 % primären OH-Gruppen.
- 45 Gew.-Teile: eines Polyols mit der Hydroxylzahl (OHZ) von 29 mg KOH/g, einer mittleren Funktionalität von 2,6 und einem Ethylenoxid (EO)/Propylenoxid (PO)-Verhältms von 18/82 mit 85 % primären OH-Gruppen und einem Fullstoffgehalt (polymerisiertes Styrol / Acrylnitril im Verhältnis 2 : 3) von 20 Gew.-%.
- 3,6 Gew -Teile: Wasser
- 0,1 Gew.-Teile: Treibkatalysator (Dabco^{®} BL-11, Air Products)
- 0,35 Gew.-Teile: Gelkatalysator (Polycat^{®} 77, Air Products)
- 1,0 Gew.-Teile: Silikonstabilisatoi (Tegostab^{®} B 8719LF, Degussa-Goldschmidt AG)
- 1,0 Gew.-Teile: eines Polyetherpolyols mit einer Hydroxylzahl (OHZ) von 37 mg KOH/g, einer mittleren Funktionalität von 2,9 und einem Ethylenoxid (EO)/Propylenoxid (PO)-Verhältnis von 72/28 mit 80% primären OH-Gruppen.

Diese A-Komponente wurde bei einer Temperatur von 25°C mit einer 4:1-Mischung aus TDI (Desmodur^{®} T80, Bayer AG) und polymeren MDI (Desmodur^{®} 44V20L, Bayer AG) (B-Komponente, NCO-Gehalt der Mischung 44,8 Gew.-%) vermischt. Zur Herstellung von Formteilen wurde das Gemisch in eine auf 60°C temperierte, mit einem Trennmittel (Acmos^{®} 180-52, ACMOS Chemie-GmbH & Co) behandelte 9,5-Liter-Form gegeben und dort aufgeschäumt. Die Menge des Gemisches wurde dabei so bemessen, dass die resultierenden Formteile eine Formteildichte von 47 kg/m³ aufweisen. Zur Herstellung von Formteilen mit Index 80 (Standard CC) betrug das Gewichtsverhältnis von A-Komponente zu B-Komponente 100:32,1. Die Form wurde mit einem Deckel verschlossen und in eine Presse oder Schließe eingebracht, um dem Schäumdruck entgegenzuwirken und das Werkzeug geschlossen zu halten. Nach 5 Minuten wurde der Deckel entfernt und der Schaumstoff durch mechanisches Zusammendrücken solange bearbeitet, bis der Schaum offenzellig, d.h. schrumpffrei war.

TDA- und MDA-Gehalte der Hautzone der Formteile:

| Standard | Index | 2,4-TDA [ppm]^{a)} | 2,6-TDA [ppm]^{a)} | 4,4'-MDA [ppm]^{a)} | 2,4'-MDA [ppm]^{a)} | 2,2'-MDA [ppm]^{a)} |
|---|---|---|---|---|---|---|
| CC | 80 | 8,8 | 562,4 | 118,7 | 15,2 | 1,5 |

| | | | | | | |
|---|---|---|---|---|---|---|
| ^{a)} Lagerzeit 24h | | | | | | |

Mechanische Eigenschaften der Formteile (gemessen nach 7 Tagen):

| Standard | Index | Dichte [kg/m³] | CLD 4/40 [kPa] | Zugspannung [kPa] | Bruchdehnung [%] | DVR 50% [%] | DVR 75% [%] |
|---|---|---|---|---|---|---|---|
| CC | 80 | 46,3 | 3,5 | 173 | 152 | 7,0 | 10,1 |

| | | | | | | | |
|---|---|---|---|---|---|---|---|
| CLD 4/40: Stauchhärte 4.Zyklus bei 40 % Verformung nach DIN EN ISO 3386-1-98. DVR: Druckverformungsrest bei 50 % bzw. 75 % Verformung (DIN EN ISO 1856). Zugspannung, Bruchdehnung nach DIN EN ISO 1798. | | | | | | | |

### Beispiel 3

Analog Standardrezeptur CC wurden Weichformschaumstoffteile hergestellt. Die Isocyanatkomponente der Standardrezeptur CC wurde mit 10 Gew.-% des Aminfängers 2 (AMF 2) versetzt und verschäumt. Zur Herstellung von Formteilen mit Index 80 (Standard CC) beträgt das Gewichtsverhältnis von A-Komponente zu B-Komponente 100:35,3. Die Ergebnisse sind in den nachfolgenden Tabellen zusammerigefasst.

TDA- und MDA-Gehalte der Hautzone der Formteile:

| Bsp. | Index | 2,4-TDA [ppm]^{a)} | 2,6-TDA [ppm]^{a)} | 4,4'-MDA [ppm]^{a)} | 2,4'-MDA [ppm]^{a)} | 2,2'-MDA [ppm]^{a)} |
|---|---|---|---|---|---|---|
| 3a a | 80 | < 0,2 | 4,0 | < 0,2 | 0,5 | 1,4 |

| | | | | | | |
|---|---|---|---|---|---|---|
| ^{a)} Lagerzeit 24h | | | | | | |

Mechanische Eigenschaften der Formteile (gemessen nach 7 Tagen):

| Bsp. | Index | Dichte [kg/m³] | CLD 4/40 [kPa] | Zugspannung [kPa] | Bruchdehnung [%] | DVR 50% [%] | DVR 75% [%] |
|---|---|---|---|---|---|---|---|
| 3 a | 80 | 45,8 | 3,4 | 180 | 177 | 10,3 | 17,9 |

### Herstellung der erfindungsgemäßen Aminfänger (AMF):

### AMF 1 (Acetylstearat):

Zu einer Suspension von 459 g Natriumstearat in 5 000 ml Dimethylacetamid werden bei 60°C 118 g Acetylchlorid getropft. Man erwärmt für 3 h auf 100°C, kühlt auf 20°C herunter und saugt vom gebildeten Kochsalz ab. Es wird anschließend im Vakuum bei 110°C eingeengt.
Ausbeute: 400 g des Acetylstearats, Säurezahl 330 mg KOH/g nach völliger Verseifung.

### AMF 2 (Ölsäureanhydrid):

Es werden 565 g Ölsäure und 405 g Essigsäureanhydrid für 3 h zum Rückfluss erhitzt und anschließend eingeengt, wobei eine Sumpftemperatur von 175°C erreicht wird. Anschließend wird eingeengt und bei 0,5 mbar und 150°C trocken gezogen.
Ausbeute: 546 g Ölsäureanhydrid, Säurezahl 195 mg KOH/g nach völliger Verseifung.

### AMF 3.

Es werden 565 g Olsäure, 146 g Adipinsäure und 408 g Essigsäureanhydrid 3 h zum Rückfluss erhitzt, wobei eine Sumpftemperatur von 180°C erreicht wird Man engt em und zieht bei 0,5 mbar trocken
Ausbeute- 670 g, Schmelzpunkt 60-65°C, Säurezahl 322 mg KOH/g nach volliger Verseifung.

### AMF 4·

Es werden 723 g Ricinolsaure und 1000 g Essigsaureanhydrid für 3 Stunden zum Rückfluss erhitzt und bis zu einer Temperatur von 170°C emgeengt, wobei abschließend im Vakuum bei 0,5 mbar behandelt wird.
Ausbeute. 754g, Säurezahl 112 mg KOH/g nach Verseifung.

### AMF 5:

Es werden 745 g Ricinolsaure, 146 g Adipinsaure und 1020 g Essigsaureanhydrid für 3 Stunden bei 140°C zum Ru̇ckfluss erhitzt, dann bis zu einer Temperatur von 150°C eingeengt Abschließend wird bei 0,5 mbar trocken gezogen.
Ausbeute· 900g, Schmelzpunkt 70°C, Sȧurezahl 221 mg KOH/g nach Verseifung

## Patentansprüche

1. Verfahren zur Herstellung von Kunststoffformteilen aus Polyurethan, bei dem
a) die Form mit einem externen Formtrennmittel vorbehandelt wird,
b) in die vorbehandelte Form die zur Bildung des Formteils benötigte Menge an Reaktionskomponenten und Hilfs- und Zusatzstoffen eingebracht wird, wobei die Isocyanatkomponente 1 bis 10 Gew.-% mindestens einer Komponente (X) aus der Gruppe bestehend aus Anhydriden von Carbonsäuren mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatome hat, und Polyanhydriden von Carbonsäuren und Polycarbonsäuren, vorzugsweise Dicarbonsäuren, mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatomen hat, enthält, und das Formteil gebildet wird, und
c) das gebildete Formteil anschließend aus der Form entnommen wird.

2. Verfahren zur Herstellung von Kunststoffformteilen aus Polyurethan gemäß Anspruch 1, bei dem dem externen Formtrennmittel in Verfahrensschritt a) mindestens eine Komponente (X) aus der Gruppe bestehend aus Anhydriden von Carbonsäuren mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatome hat, und Polyanhydriden von Carbonsäuren und Polycarbonsäuren, vorzugsweise Dicarbonsäuren, mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatomen hat, zugesetzt wird.

3. Verwendung der Komponente (X) aus der Gruppe bestehend aus Anhydriden von Carbonsäuren mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatome hat, und Polyanhydriden von Carbonsäuren und Polycarbonsäuren, vorzugsweise Dicarbonsäuren, mit gleichen oder unterschiedlichen Kohlenwasserstoffresten, wobei mindestens einer der Kohlenwasserstoffreste 8 bis 40 Kohlenstoffatome, vorzugsweise 12 bis 40 Kohlenstoffatomen hat, als Teil eines externen Formtrennmittels und als Zusatz zur Isocyanatkomponente bei der Herstellung von Polyurethanformteilen.

## Claims

1. Process for the production of plastics mouldings made of polyurethane, where
a) the mould is pretreated with an external mould-release agent,
b) the quantity of reaction components and auxiliaries and additional substances required for the formation of the moulding is introduced into the pretreated mould, where the isocyanate component comprises from 1 to 10% by weight of at least one component (X) from the group consisting of anhydrides of carboxylic acids having identical or different hydrocarbon moieties, where at least one of the hydrocarbon moieties has from 8 to 40 carbon atoms, preferably from 12 to 40 carbon atoms, and polyanhydrides of carboxylic acids and polycarboxylic acids, preferably dicarboxylic acids, having identical or different hydrocarbon moieties, where at least one of the hydrocarbon moieties has from 8 to 40 carbon atoms, preferably 12 to 40 carbon atoms, and the moulding is formed, and
c) the moulding formed is then removed from the mould.

2. Process for the production of plastics mouldings made of polyurethane according to Claim 1, where at least one component (X) from the group consisting of anhydrides of carboxylic acids having identical or different hydrocarbon moieties, where at least one of the hydrocarbon moieties has from 8 to 40 carbon atoms, preferably from 12 to 40 carbon atoms, and polyanhydrides of carboxylic acids and polycarboxylic acids, preferably dicarboxylic acids, having identical or different hydrocarbon moieties, where at least one of the hydrocarbon moieties has from 8 to 40 carbon atoms, preferably from 12 to 40 carbon atoms, is added to the external mould-release agent in step a).

3. Use of the component (X) from the group consisting of anhydrides of carboxylic acids having identical or different hydrocarbon moieties, where at least one of the hydrocarbon moieties has from 8 to 40 carbon atoms, preferably from 12 to 40 carbon atoms, and polyanhydrides of carboxylic acids and polycarboxylic acids, preferably dicarboxylic acids, having identical or different hydrocarbon moieties, where at least one of the hydrocarbon moieties has from 8 to 40 carbon atoms, preferably 12 to 40 carbon atoms, as part of an external mould-release agent and as addition to the isocyanate component in the production of polyurethane mouldings.

## Revendications

1. Procédé de fabrication de pièces moulées en plastique en polyuréthane, selon lequel
a) le moule est prétraité avec un agent de démoulage externe,
b) la quantité nécessaire de composants réactionnels et d'adjuvants et d'additifs pour la formation de la pièce moulée est introduite dans le moule prétraité, le composant isocyanate contenant 1 à 10 % en poids d'au moins un composant (X) du groupe constitué par les anhydrides d'acides carboxyliques à radicaux hydrocarbonés identiques ou différents, au moins un des radicaux hydrocarbonés contenant 8 à 40 atomes de carbone, de préférence 12 à 40 atomes de carbone, et les polyanhydrides d'acides carboxyliques et d'acides polycarboxyliques, de préférence d'acides dicarboxyliques, à radicaux hydrocarbonés identiques ou différents, au moins un des radicaux hydrocarbonés contenant 8 à 40 atomes de carbone, de préférence 12 à 40 atomes de carbone, et la pièce moulée est formée, et
c) la pièce moulée formée est ensuite extraite du moule.

2. Procédé de fabrication de pièces moulées en plastique en polyuréthane selon la revendication 1, selon lequel au moins un composant (X) du groupe constitué par les anhydrides d'acides carboxyliques à radicaux hydrocarbonés identiques ou différents, au moins un des radicaux hydrocarbonés contenant 8 à 40 atomes de carbone, de préférence 12 à 40 atomes de carbone, et les polyanhydrides d'acides carboxyliques et d'acides polycarboxyliques, de préférence d'acides dicarboxyliques, à radicaux hydrocarbonés identiques ou différents, au moins un des radicaux hydrocarbonés contenant 8 à 40 atomes de carbone, de préférence 12 à 40 atomes de carbone, est ajouté à l'agent de démoulage externe à l'étape de procédé a).

3. Utilisation du composant (X) du groupe constitué par les anhydrides d'acides carboxyliques à radicaux hydrocarbonés identiques ou différents, au moins un des radicaux hydrocarbonés contenant 8 à 40 atomes de carbone, de préférence 12 à 40 atomes de carbone, et les polyanhydrides d'acides carboxyliques et d'acides polycarboxyliques, de préférence d'acides dicarboxyliques, à radicaux hydrocarbonés identiques ou différents, au moins un des radicaux hydrocarbonés contenant 8 à 40 atomes de carbone, de préférence 12 à 40 atomes de carbone, en tant que partie d'un agent de démoulage externe et en tant qu'additif pour le composant isocyanate lors de la fabrication de pièces moulées en polyuréthane.
